Europäisches Patentamt

(19) European Patent Office

Office européen des brevets

(11) EP 0 920 141 A2

(12) **EUROPEAN PATENT APPLICATION**

(43) Date of publication:
02.06.1999 Bulletin 1999/22

(51) Int. Cl.⁶: $H04B\ 5/00$

(21) Application number: 98309505.0

(22) Date of filing: 20.11.1998

(84) Designated Contracting States:
AT BE CH CY DE DK ES FI FR GB GR IE IT LI LU
MC NL PT SE
Designated Extension States:
AL LT LV MK RO SI

(30) Priority: 25.11.1997 JP 323516/97
13.05.1998 JP 130817/98

(71) Applicant:
SUMITOMO SPECIAL METALS COMPANY
LIMITED
Osaka-shi, Osaka 541-0041 (JP)

(72) Inventors:
• Yamashita, Osamu,
Sumitomo Special Metals Co. Ltd.
Mishima-gun, Osaka 618-0013 (JP)
• Kawakami, Makoto,
Sumitomo Special Metals Co. Ltd.
Suita-shi, Osaka 564-0043 (JP)

(74) Representative:
Finnie, Peter John
Elkington and Fife,
Prospect House,
8 Pembroke Road
Sevenoaks, Kent TN13 1XR (GB)

(54) **A magnetic vector potential based communications system**

(57)    A communication system using a magnetic vector potential as a signal propagation medium includes a sending device (11, 21) for generating a magnetic vector potential by passing an alternating current through a coil winding and a receiving device (12, 22) for measuring an electric field generated by a time variation of the magnetic vector potential. On the sending device side, a high frequency current modulated in accordance with a signal to be sent is passed through a coil winding wound around a toroidal core made of a magnetic substance to generate a magnetic vector potential. On the receiving devices side, an electric field generated by propagation of the magnetic vector potential is sensed by an electric field sensor. The sensed electric field is a received signal.

FIG. 3

## Description

The present invention relates to a communication system using a magnetic vector potential as a signal propagation medium, and to a sending device and a receiving device used in the communication system.

Hitherto, it is widely known to use an electromagnetic wave such as a radio wave or a microwave as a general communication means. However, such an electromagnetic wave is liable to be shielded by an obstacle, and receiving and sending of signals are often hindered depending on the place and the environment in which it is used. Also, since the frequency band for use of electromagnetic waves is restricted to a comparatively narrow range by the Wireless Telegraphy Act, radio wave obstruction by radio interference is a great problem. Further, since communication systems using an electromagnetic wave, such as a portable telephone, generate leakage electromagnetic waves of several hundred milligauss, these communication systems may give rise to erroneous operations of precision devices at a proximate distance, raising a fear of various troubles. In addition, the possibility of their adverse effects on human beings cannot be ignored. Under these circumstances, development of a new communication means capable of solving the above-mentioned problems is desired.

Now, existence of a magnetic vector potential has been confirmed by an interference experiment of electron beams using electron beam holography (Phys. Rev. Lett. 48, 1443 (1982)). However, the magnetic vector potential is used merely for observation of magnetic domains by electron beam holography or for measurement of magnetic flux and magnetic flux quanta, so that practical use of the magnetic vector potential has not been carried out yet. The inventors of the present invention have searched for a novel use of the magnetic vector potential and found out that the magnetic vector potential can be a communication medium having an extremely excellent transmissivity by using a property that the magnetic vector potential cannot be physically shielded.

According to the present invention, a communication system using a magnetic vector potential includes a sending device for generating a magnetic vector potential by passing an alternating current through a coil winding and a receiving device for measuring an electric field generated by a time variation of the magnetic vector potential. In this communication system, communication is performed using a magnetic vector potential as a signal propagation medium, thereby providing excellent transmissivity and reducing the possibility of communication fault. Further, the users are released from the narrow frequency band of electromagnetic waves by employing this novel communication system.

The sending device in the communication system using the magnetic vector potential includes a coil winding made of an electrically conductive material, a power circuit for passing an alternating current through the coil winding so as to generate a magnetic vector potential, and modulating means for modulating the alternating current in accordance with a signal to be sent. This sending device can increase a sending intensity of the magnetic vector potential with a simple construction. This enables communication across a comparatively long distance in the communication system using the magnetic vector potential as a communication medium.

The magnetic vector potential is generated, for example, by passing an alternating current through a coil winding wound around a soft magnetic substance. Therefore, the magnetic vector potential can be generated effectively.

The receiving device in the communication system using the magnetic vector potential includes an electric field sensor for sensing an electric field that changes its magnitude in accordance with an amount of time variation of the magnetic vector potential, and shield means for shielding the electric field sensor against electric fields that are not related to the magnetic vector potential acting as a signal propagation medium. Without being affected by an ambient electric field, the receiving device can sense with good precision the oscillating electric field generated by the magnetic vector potential. Therefore, receiving sensitivity can be increased to an enormous extent in the communication system using the magnetic vector potential as a communication medium.

The electric field sensor can be a resonance-type electric field sensor. Accordingly, an electric field component having the same frequency as the resonance frequency can be sensed, so that accuracy in receiving signals can be improved by removing electric field components that are leaked out from various equipments, i.e. electric field components as a noise in the communication system using the magnetic vector potential.

In the case where a sensing section of the electric field sensor is surrounded and shielded against electric fields by a metal material having a high electric conductivity, the noise electric field in the outside can be removed effectively, thereby improving the accuracy in receiving signals. Also, in the case where the metal material for shielding the sensing section of the electric field sensor is grounded, the noise electric field in the outside can be removed effectively, thereby improving the accuracy in receiving signals. Further, in the case where the sensing section of the electric field sensor is surrounded and shielded against electric fields by a soft magnetic material having a high electromagnetic wave absorption efficiency, the oscillating electric field generated by propagation of the magnetic vector potential can be absorbed effectively, thereby improving the accuracy in receiving signals.

Examples of the present invention will now be described in detail with reference to the accompanying drawings, in which:

FIG. 1 is a view for explaining a concept of a magnetic vector potential;

FIG. 2 is a cross-sectional view illustrating a soft magnetic substance;

FIG. 3 is a schematic model view illustrating a communication system according to the present invention;

FIG. 4 is a view illustrating a construction of a sending device in the communication system according to the present invention;

FIG. 5A is a model plan view illustrating a magnetic vector potential generator;

FIG. 5B is a model cross-sectional view illustrating the magnetic vector potential generator;

FIGS. 6A and 6B are model views illustrating how the magnetic vector potential is generated from the sending device;

FIG. 7A is a model plan view illustrating a state in which the magnetic vector potential generator is shielded;

FIG. 7B is a model cross-sectional view illustrating a state in which the magnetic vector potential generator is shielded;

FIG. 8 is a view illustrating a construction of a receiving device in the communication system according to the present invention;

FIG. 9A is a model plan view illustrating a state in which an electric field sensor is shielded;

FIG. 9B is a model cross-sectional view illustrating a state in which the electric field sensor is shielded;

FIG. 10 is a graph illustrating a frequency characteristic of an output voltage in the electric field sensor; and

FIG. 11 is a graph illustrating a relationship between the output voltage and the oscillating electric field in the electric field sensor.

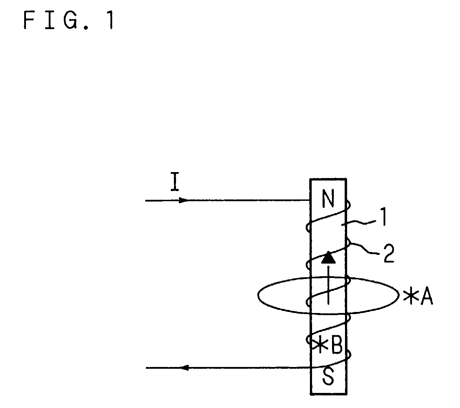

First, a concept of a magnetic vector potential will be briefly explained. FIG. 1 is a view for explaining the magnetic vector potential. FIG. 1 illustrates a solenoid incorporating a soft magnetic substance therein, and shows N and S magnetic poles generated at two ends of a rod 1, a magnetic flux density $*B$ generated inside the rod 1 (vector components will be hereafter associated with a symbol $*$, for example, like $*B$ representing a vector B), and a magnetic vector potential $*A$ (vector A will be represented by $*A$, as noted) when an alternating current I is passed through a coil winding 2 wound around the rod 1 of semiinfinite length made of a soft magnetic substance.

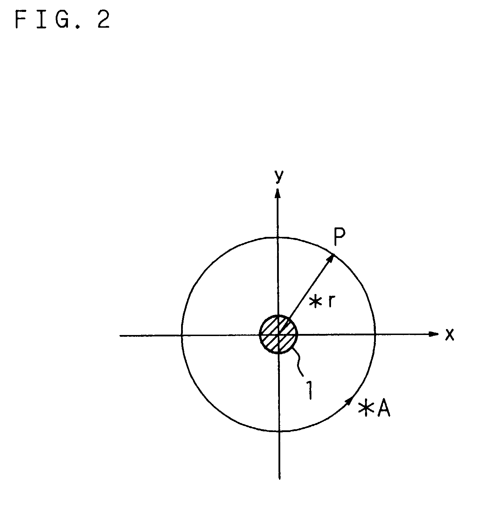

Assuming that the directions parallel to the cross section of the rod 1 are represented by x and y axes and the axial direction of the rod 1 is represented by z axis as shown in FIG. 2, the magnetic flux density $*B$ generated inside the magnetic substance by application of the alternating current is represented by the following expression (1) at an observation point P located at a distance r from a center point (origin) of a cross section of the core.

$$*B = (B_x, B_y, B_z) = (0, 0, B) \tag{1}$$

Here, since the magnetic flux density $*B$ generally satisfies the following expression (2), it can be defined by the following expression (3) using a magnetic vector potential $*A$. Conversely, the magnetic vector potential $*A$ can be determined by this definition expression.

$$\text{div } *B = 0 \tag{2}$$

$$*B = \text{rot} \times *A \tag{3}$$

Assuming than the radius of the rod 1 is denoted by $r_0$ and its cross-sectional area is denoted by S, the total magnetic flux $\Phi$ of the rod 1 is represented by the following expression (4). From the above expressions (1) and (3), the magnetic vector potential $*A$ is represented by the following expressions (5A) and (5B) on the outside and on the inside of the rod 1, respectively. Here, $*i$ and $*j$ represent planar coordinates in the cross section of the rod 1.

$$\Phi = BS \tag{4}$$

$$*A = \Phi(-y \, *i + x \, *j) / 2\pi r^2 \quad (r > r_0) \tag{5A}$$

$$*A = \Phi(-y \, *i + x \, *j) / 2\pi r_0^2 \quad (r \leqq r_0) \tag{5B}$$

On the other hand, the magnetic vector potential $*A$ must always satisfy the following expression (6) in accordance with Stokes' theorem. From a brief calculation, it will be easily confirmed that this expression (6) is satisfied.

[Math. 1]

In order for this Stokes' theorem to be satisfied, the magnetic vector potential $*A$ must always be continuous.

Therefore, since the magnetic vector potential *A cannot be physically shielded, the magnetic vector potential can be a signal having a very good transmissivity as a communication medium and is expected as a signal propagation medium in a novel communication system.

Substituting the above expression (3) into the following expression (7) which is a Maxwell equation and using a gauge function $\phi$, the electric field *E can be represented by the following expression (8). This expression (8) shows that the time variation of the magnetic vector potential *A generates the electric field *E directly.

$$\text{rot} \times {}^{*}E = -\partial {}^{*}B / \partial t \tag{7}$$

$$^{*}E = -\partial {}^{*}A / \partial t + \text{grad} \cdot \phi \tag{8}$$

Here, since it is assumed that no electric charge exists in a region considered in mind, a radiant gauge can be adopted, whereby the equation $\text{grad} \cdot \phi = 0$ can be assumed. Therefore, the electric field *E observed outside of the rod 1 of the soft magnetic substance ($r > r_0$) is represented by the following expression (9), whereby it is understood that the absolute value of the electric field *E decreases in inverse proportion to the distance r from the center of the rod 1.

$$^{*}E = (\partial \phi / \partial t) \cdot (y * i - x * j) / 2\pi r^{2} \ (r > r_{0}) \tag{9}$$

Accordingly, in order to increase the intensity of the magnetic vector potential *A, it is sufficient to increase the total magnetic flux $\Phi$. Also, in order to increase the intensity of the electric field *E as a signal to be received, it is necessary to increase $\partial \Phi / \partial t$ (the amount of time variation of in the total magnetic flux ($\Phi$). Accordingly, a good communication system can be achieved by increasing the amount of time variation of the magnetic flux.

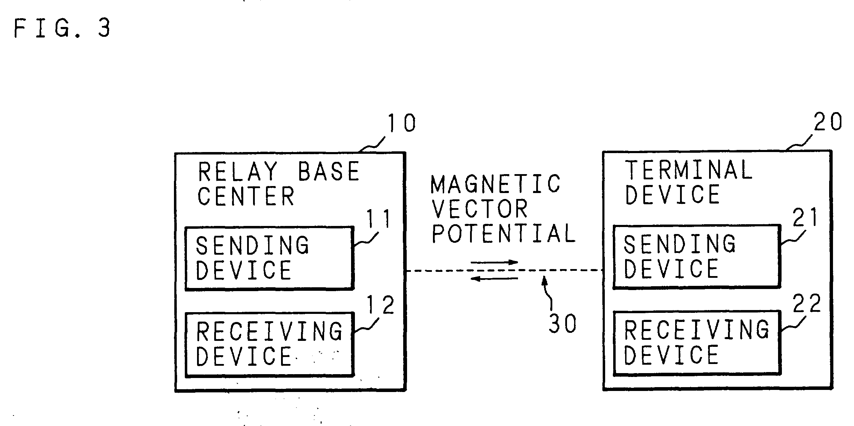

FIG. 3 is a schematic model view illustrating a communication system to which the present invention is applied. Referring to FIG. 3, reference numerals 10 and 20 represent a relay base center and a terminal device, respectively. Between the relay base center 10 and the terminal device 20, there is an area in which the radio wave obstruction occurs or a place where it is difficult to construct a wire line. Therefore, a bi-directional wireless line 30 using a magnetic vector potential is disposed between the relay base center 10 and the terminal device 20.

The relay base center 10 includes a sending device 11 for generating a magnetic vector potential to be sent to the terminal device 20 via the wireless line 30 and a receiving device 12 for capturing an electric field generated by time variation of the magnetic vector potential sent from the terminal device 20 via the wireless line 30 to convert the captured electric field into a desired output signal. Also, the terminal device 20 includes a sending device 21 for generating a magnetic vector potential to be sent to the relay base center 10 via the wireless line 30 and a receiving device 22 for capturing an electric field generated by time variation of the magnetic vector potential sent from the relay base center 10 via the wireless line 30 to convert the captured electric field into a desired output signal.

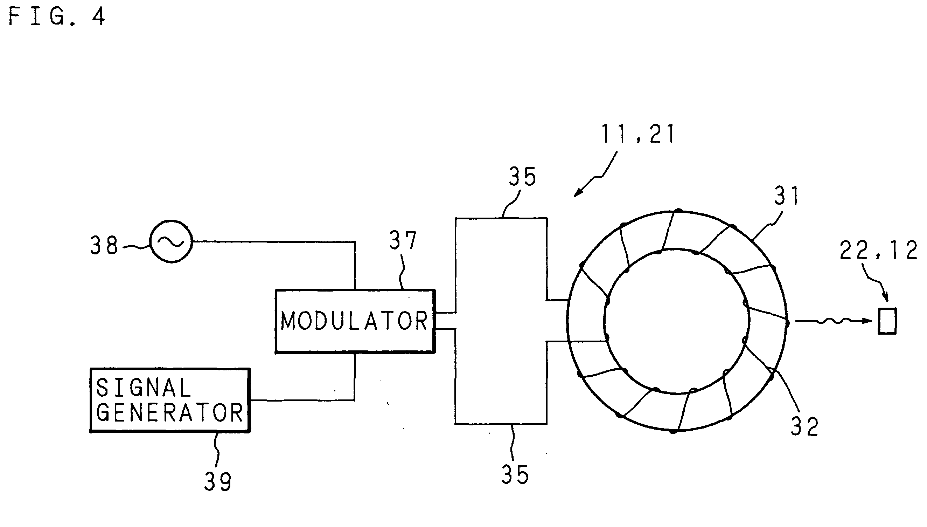

FIG. 4 is a view illustrating a construction of the sending device 11 or 21. The sending device 11 or 21 includes a toroidal core 31 around which a coil winding 32 is wound approximately along its entire circumference. One end of a lead wire 35, 35 is electrically connected to either end of the coil winding 32, and the other end of the lead wire 35, 35 is electrically connected to a modulator 37, which in turn is electrically connected to a power circuit 38 and a signal generator 39. In accordance with a signal from the signal generator 39, the modulator 37 performs AM (Amplitude Modulation), FM (Frequency Modulation), or PM (Pulse Modulation : for example, pulse width modulation) on an alternating current from the power circuit 38 to pass the modulated alternating current through the coil winding 32. This allows the magnetic vector potential, which is emitted from the toroidal core 31 and the coil winding 32, to be subjected to a great or small change or intermittent (pulse width) change.

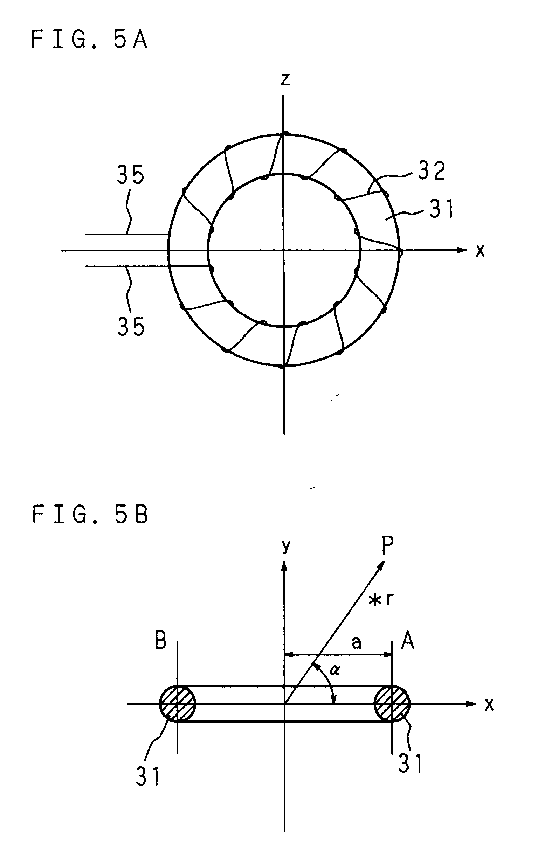

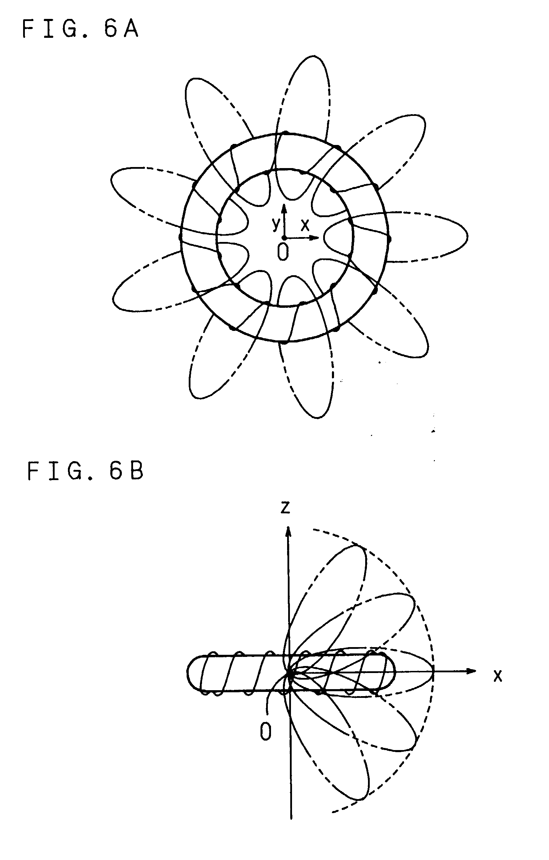

FIGS. 5A and 5B are a model plan view and a model cross-sectional view, respectively, of a magnetic vector potential generator. The toroidal core 31 is formed to have a torus-like shape using, as a material, a soft magnetic substance having a high electric resistance, such as a soft ferrite. A Mn-Zn ferrite having a high magnetic permeability with a small eddy current loss and a high electric resistance is used as the soft magnetic substance in order to increase the time variation of the magnetic vector potential, i.e. the intensity of the electric field, as much as possible. The magnetic vector potential is generated around the toroidal core 31 in a doughnut-like area having approximately the same shape, as shown in FIGS. 6A and 6B, by passing a high frequency current through the coil winding 32 wound around the toroidal core 31. Here, the winding density in the coil winding 32 may be partially changed so as to allow the generated magnetic vector potential to have directivity.

Assuming the cross-sectional area of the toroidal core 31 to be S, its magnetic permeability to be $\mu$, and the radius of the magnetic path length along the center of the cross section to be a, the electric current I flowing through the coil winding 32 is represented by the expression (10) when an electric current I having a frequency of f with the maximum value of $I_0$ is passed through the coil winding 32 having a winding number of N, where $\omega = 2\pi f$. Therefore, the magnetic field H generated in the toroidal core 31 is represented by the expression (11).

$$I = I_0 \sin\omega\, t \tag{10}$$

$$H = N\, I / 2\pi a \tag{11}$$

Accordingly, the magnetic flux density B inside the toroidal core 31 is represented by the expression (12), and the magnetic flux $\Phi$ is represented by the expression (13).

$$B = \mu H = \mu N\, I / 2\pi a \tag{12}$$

$$\Phi = BS = S\mu N\, I / 2\pi a \tag{13}$$

The time variation of the magnetic flux $\Phi$, i.e. $\partial\Phi / \partial t$, is represented by the expression (14). Therefore, by substituting the expression (14) into the above-mentioned expression (9), one finds that the electric field *E generated at a distance r from the center of the plane obtained by bisecting the toroidal core 31 is represented by the expression (15). Here, the notations *i and *j represent the planar coordinates in the cross section of the toroidal core 31.

$$\partial\Phi / \partial t = S\mu\, N\omega\, I_0 \cos\omega\, t / 2\pi a \tag{14}$$
$$= S\mu\, N\, f\, I_0 \cos\omega\, t / a$$

$$*E = S\mu\, N\, f\, I_0 \cos\omega\, t\, (y\, *i - x\, *j) / 2\pi a r^2 \tag{15}$$

However, this expression (15) applies to the case where one cross section of the toroidal core 31 is considered. Actually, since the magnetic vector potentials are generated by two cross sections as shown in FIG. 5B, one must determine electric fields generated by the two magnetic vector potentials.

In order to determine the electric fields $*E_A$ and $*E_B$ generated on the cross sections A and B of the toroidal core 31 as shown in FIG. 5B, the x and y coordinates in the expression (15) are converted. Assuming the center of the toroidal core 31 to be an origin, the electric field $*E_A$ generated on the cross section A is determined by conversion of the coordinates x, y, and r in the expression (15) using the expressions (16) to (18). Here, $\alpha$ is an angle formed by the central axis (z axis) of the toroidal core 31 and the arrow P indicating the direction of the distance r, as shown in FIG. 5B.

$$x = r \cos\alpha - a \tag{16}$$

$$y = r \sin\alpha \tag{17}$$

$$r^2 = x^2 + y^2 = a^2 + r^2 - 2\, r\, a \cos\alpha \tag{18}$$

By substituting these expressions (16) to (18) into the above-mentioned expression (15), one finds that the electric field $*E_A$ generated on the cross section A is represented by the expression (19).

[Math. 2]

Since the magnetic flux density *B generated on the cross section B has a direction opposite to that on the cross section A, the electric field $*E_B$ generated on the cross section B is determined by conversion of the coordinates x, y, and r in the expression (15) using the expressions (20) to (22).

$$x = r \cos\alpha + a \tag{20}$$

$$y = r \sin\alpha \tag{21}$$

$$r^2 = x^2 + y^2 = a^2 + r^2 + 2\, r\, a \cos\alpha \tag{22}$$

By substituting these expressions (20) to (22) into the above-mentioned expression (15), one finds that the electric field $*E_B$ generated on the cross section B is represented by the expression (23).

[Math. 3]

The sum of these expressions (19) and (23) is the electric field *E generated by the toroidal core 31. Accordingly, the electric field *E to be determined is represented by the formula (24).

[Math. 4]

From the above expression (24), it will be understood that a large electric field intensity can be obtained by using a soft magnetic substance having a high magnetic permeability as the toroidal core 31 and by passing a high-frequency current through the coil winding 32.

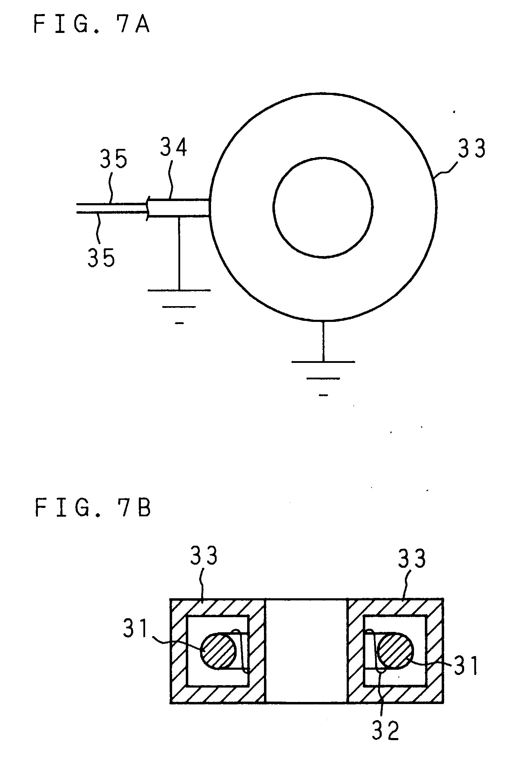

However, if the frequency of the high-frequency current passed through the coil winding 32 is too high, an electromagnetic wave is radiated around the toroidal core 31. Therefore, it is better to provide a means for shielding the radiant electromagnetic wave in the sending device 11 or 21. FIGS. 7A and 7B are a plan view and a cross-sectional view, respectively, illustrating an example of the means for shielding this radiant electromagnetic wave. In FIGS. 7A and 7B, like numerals refer to like parts appearing in FIGS. 5A and 5B.

The toroidal core 31 having the coil winding 32 is housed in a metal box 33 for shielding electric fields from other equipments. Also, lead wires 35, 35 of the coil winding 32 that extend from the toroidal core 31 toward the outside are allowed to pass through a metal pipe 34 for shielding against electric fields. The metal box 33 and the metal pipe 34 are grounded.

Thus, the radiant electromagnetic wave from other equipments can be shielded by completely enclosing the toroidal core 31 made of a soft magnetic substance with a metal plate (metal box 33) having an excellent electric conductivity. Also, the radiant electromagnetic wave can be reflected by grounding the metal plate (metal box 33). The efficiency of shielding the radiant electromagnetic wave can be improved also by completely enclosing the toroidal core 31 with a soft material having a high radio wave absorption efficiency. These shield means do not produce any effect on the shielding of the magnetic vector potential, so that no influence is exerted on the generation of the magnetic vector potential. Therefore, even if a high frequency current is passed through the coil winding 32, the leakage of the electromagnetic wave generated thereby can be prevented by providing such a shield means. This makes it possible to pass an electric current having a higher frequency, thereby providing a larger electric field which can be captured and sensed more easily.

On the other hand, if the generated electric field is too large, it may give adverse effects on the peripheral equipments, causing erroneous operations of various precision equipments. Also, there may be adverse effects on human beings as well. Therefore, it is necessary to control the magnitude of the generated electric field to be less than several hundred millivolts / meter. This is far smaller than the magnitude of the electric field generated by an electric potential (several thousand volts) of static electricity.

The magnetic vector potential generator in the sending device 11 or 21 may be of solenoid-type incorporating a soft magnetic substance instead of the above-mentioned toroidal-type. However, in the case of a solenoid-type, it is necessary to shield magnetic fields from the N and S magnetic poles generated at the ends of the rod-like core. Also, it is possible to construct the magnetic vector potential generator only with a coil and without using a core. Further, the cross-sectional shape (such as elliptical, rectangular, or square) and the ring shape (such as elliptical, rectangular, polygonal, or triangular) of the core are not specifically limited.

Next, the receiving device 12 or 22 will hereafter be explained. The receiving device 12 or 22 includes an electric field sensor that senses an electric field generated by a time variation of the magnetic vector potential. Basically, the electric field sensor may be of any kind as long as it is a sensor having a high sensitivity, so that any of the various electric field sensors such as a loop antenna may be used. However, electric field sensors such as a loop antenna are not suitable for use because they have a large dimension which raises a problem that the electric field shield is difficult and the sensors cannot be carried. Accordingly, in this example, an explanation will hereafter be given on a case in which a resonance-type electric field sensor, which is suitable for measuring the electric field generated by the time variation of the magnetic vector potential, is used as the electric field sensor.

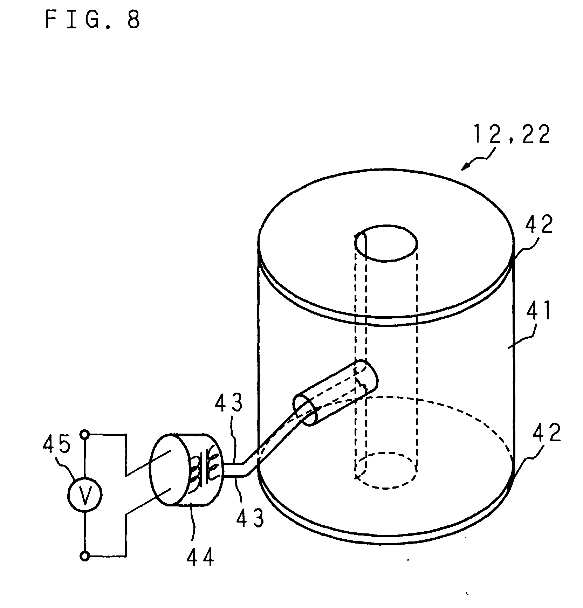

FIG. 8 is a schematic view illustrating a construction of an example of the receiving device 12 or 22. Referring to FIG. 8, a cylindrical dielectrics 41 is shown. Metal electrodes 42, 42 made of silver are disposed at the ends of the dielectrics 41. The two metal electrodes 42, 42 are connected by lead wires 43. The ends of the lead wires 43 are connected to a primary-side coil of a transformer 44, and a voltmeter 45 is connected to a secondary-side coil of the transformer 44.

The electric field is measured by examining, with the voltmeter 45, an electromotive force generated at LC resonance when electric charges induced at the ends of the dielectrics 41 by the oscillating electric field pass through the lead wires 43. In doing this, the resonance frequency is adjusted to coincide with the frequency of the magnetic vector potential.

The resonance-type electric field sensor is advantageously used because only the electric field component having the same frequency is selectively received, so that the electric field components leaking from various equipments and having different frequencies are scarcely measured. Here, the relative dielectric constant of the dielectrics 41 is preferably as high as possible in order to reduce the size of the sensing section of the sensor. Also, the imaginary part of the dielectric constant of the dielectrics 41 at the resonance frequency is preferably as small as possible in order to raise the Q value to improve the S/N ratio.

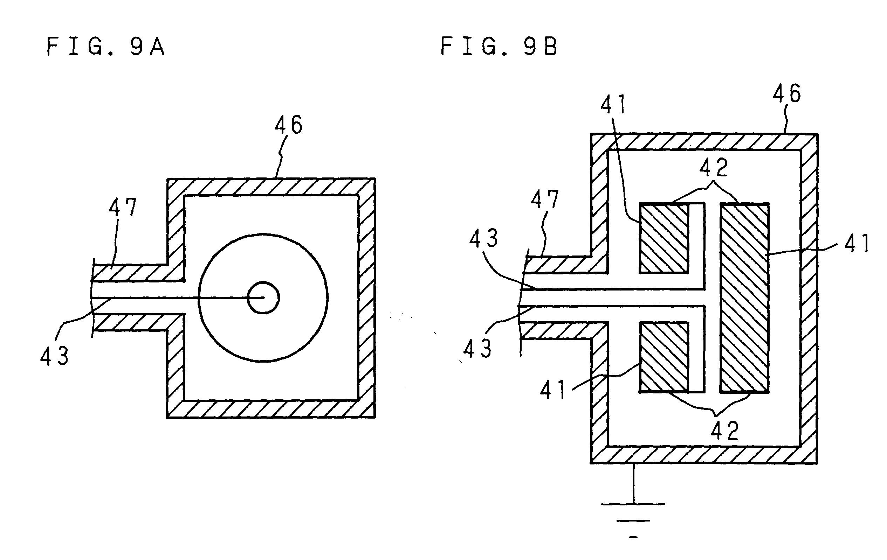

It is preferable that a means for shielding the leakage electric field from other equipments is provided in the electric field sensor so that the sensor may not be affected by the leakage electric field. FIGS. 9A and 9B are respectively a plan view and a cross-sectional view illustrating an example of the shield means for shielding the leakage electric field. In FIGS. 9A and 9B, like numerals refer to like parts appearing in FIG. 8.

The dielectrics 41 equipped with metal electrodes 42, 42 on their ends is housed in a metal box 46 for shielding the electric field from other equipments. The metal box 46 is grounded. The lead wires 43, 43 connected to the metal electrodes 42, 42 and drawn out of the dielectrics 41 are allowed to pass through a metal pipe 47 for shielding against electric fields.

Thus, the receiving accuracy can be improved by completely enclosing the sensing section of the electric field sensor with a metal plate (metal box 46) having an excellent electric conductivity or by grounding the metal plate (metal box 46). The receiving accuracy can be improved also by completely enclosing the sensing section of the electric field sensor with a soft material having a high radio-wave absorption efficiency.

It is possible to use a commercially available highly sensitive sensor as the electric field sensor. However, if it is used as it is, it will measure the electric fields generated from various equipments such as electric devices, thereby decreasing the S/N ratio. Therefore, the above-mentioned shielding structure is essential.

Particularly, in the case of a magnetic vector potential having a frequency of less than 10 kHz, metal materials are preferable as a shielding material. However, in the case of a magnetic vector potential having a frequency exceeding 100 kHz, it is preferable to select a shielding material in accordance with the frequency. Also, since the observed magnetic field is an alternating magnetic field, influence of electrostatic field caused by human beings and organic substances can be entirely ignored. Further, since the received electric field has a very weak intensity, adverse effects on human beings can be almost ignored. Also, since such a shielding means does not have any effect on the shielding of the magnetic vector potential, it will not exert any influence on the generation of the magnetic vector potential. Since no shielding effects are produced by the above-mentioned electric field shield on the electric field generated by the time variation of the magnetic vector potential, there will not be a decrease in the signal intensity due to the communication environment or a decrease in the S/N ratio due to the ambient electromagnetic waves.

A bi-directional communication using the magnetic vector potential between the relay base center 10 and the terminal device 20 can be achieved by employing the sending devices 11, 21 and the receiving devices 12, 22 having the above-mentioned construction. Namely, in actual communication, a voltage modulated in accordance with various input signals can be converted into an electric current to generate a magnetic vector potential from a soft magnetic substance, and an electric field generated by the time variation of the magnetic vector potential is measured on the receiver side, whereby the resulting measured electric field is converted into an electric current or a voltage to be taken out as a desired output signal. Thus, the magnetic vector potential can construct a communication system similar to the conventional one using an electromagnetic wave, and therefore enables communication in an environment where the conventional wireless communication is difficult.

The communication system of the present invention can be employed not only for communication at a place where the wireless communication is difficult, such as in a factory, in a driftway, or in a tunnel, but also for communication between a parts carrier vehicle, a robot, or the like and a center for controlling these devices. Further, the communication system of the invention can be used for information communication in various toll systems, such as on a highway, in a merchandise theft prevention system, or the like.

Next, specific examples of a sending device and a receiving device in such a communication system using a magnetic vector potential as a signal propagation medium will be explained.

The magnetic vector potential generator of the sending device was fabricated as follows. A Mn-Zn ferrite having a relative dielectric constant of 5000 as a soft magnetic substance was formed into a toroidal core shape having an outer radius of 40 mm, an inner radius of 30 mm, and a sectional radius of 10 mm. A copper wire having a diameter of 0.2 mm was wound around the toroidal core 31 for 500 turns to fabricate a coil winding 32. The toroidal core 31 having the coil winding 32 wound therearound was completely enclosed with a metal box 33 made of permalloy having an outer radius of 51 mm, an inner radius of 23 mm, and a height of 17 mm so as to shield a radiant electromagnetic wave generated from the coil winding 32 when an electric current having a frequency of 20 kHz was passed. Further, after the lead wires 35, 35 of the coil winding 32 were covered with a metal pipe 34, the metal box 33 and the metal pipe 34 were grounded.

On the other hand, the electric field sensor of the receiving device was fabricated as follows. A cylindrical dielectrics having a relative dielectric constant of 10,000 (radius : 50 mm, length : 50 mm) was processed by forming a bore of radius 2 mm concentrically with respect to the central axis to form a tubular dielectrics 41. Then, silver was applied and centered onto the upper and lower surfaces of the obtained tubular dielectrics 41 to form metal electrodes 42, 42. Thereafter, lead wires 43, 43 were taken out from the metal electrodes 42, 42 and connected to a transformer 44 having a self inductance of 18 mH to fabricate a resonance-type electric field sensor having a resonance frequency of 20 kHz for measuring the electric field as an electromotive force by means of a voltmeter 45.

Here, the high frequency current to be passed through the coil winding 32 was set to have a frequency as low as 10 kHz in order to reduce the radiant electromagnetic wave as much as possible. Further, the electric current was set to be lower than 300 mA in order to prevent heat generation due to Joule's heat. A leakage magnetic field from the toroidal core 31 was measured with a highly sensitive magnetic sensor when an electric current of 300 mA was passed. The result showed that the leakage magnetic field was 10 to 20 μG near a side wall of the outer circumference of the toroidal core 31. This magnitude of the magnetic field is a magnitude such that the effects exerted on the electric field by the variation of the magnetic field can be ignored.

For a case where an electric field shield means was provided in the sending device and for a case where no electric field shield means was provided, the relationship between the distance r (m) from the center of the toroidal core 31 and the electric field (mV/m) measured at that position and the relationship with the angle $\alpha$ formed between the z axis of the toroidal core 31 and the arrow P indicating the direction of the distance r were determined by measuring the amplitude of the electric field. The result of the test is shown in Table 1.

As is apparent from Table 1, the electric field is measured with good reproducibility, although the distance between the sending side and the receiving side is short; and it will be understood that this electric field can be satisfactorily used for communication of a short distance. Also, as will be apparently understood from Table 1, the magnitude of the measured electric field corresponds to the magnetic vector potential shown in FIGS. 6A and 6B, and is generally spherically symmetric by being scarcely dependent on the angle $\alpha$ in the sending device. Also, it is understood that the measured electric field generated by the magnetic vector potential is almost invariable whether in the presence or in the absence of the electric field shield for the electric field sensor, and the measured electric field coincides with the calculated electric field well.

It is possible to increase the propagation distance r of the magnetic vector potential to be more than 50 to 100 meters either by increasing the radius of the toroidal core 31 or by increasing the winding number and the cross-sectional wire width of the coil winding 32 wound around the toroidal core 31.

Accordingly, it is understood that the present invention provides a communication system having a considerably excellent transmissivity as compared with the conventional communication system using an electromagnetic wave.

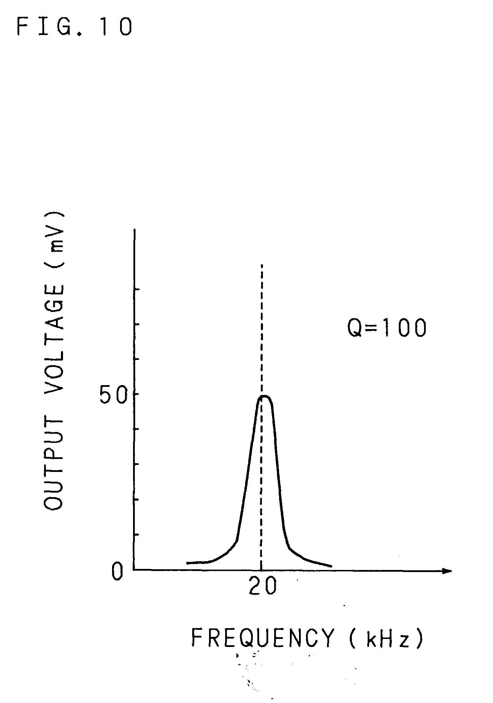

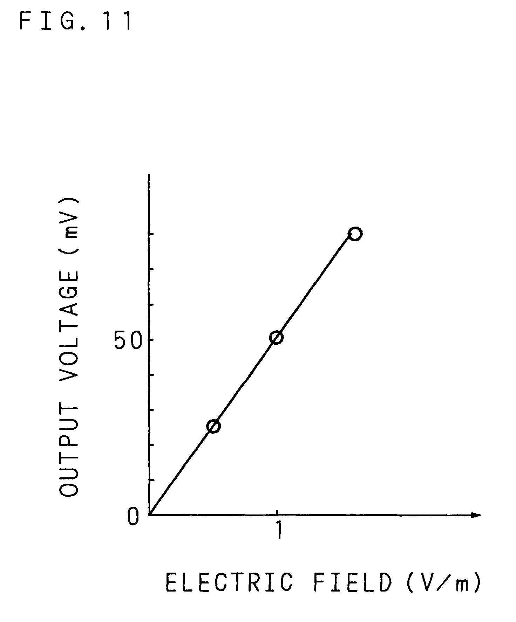

FIG. 10 shows the frequency characteristic of the output voltage in the resonance-type electric field sensor having such a construction as mentioned above. It was confirmed that the fabricated resonance-type electric field sensor showed a maximum voltage approximately at a frequency of 20 kHz. FIG. 11 shows the relationship between the output voltage and the oscillating electric field in the resonance-type electric field sensor. It was found out that the fabricated resonance-type electric field sensor produced an output voltage which was proportional to the electric field.

Using the above-mentioned resonance-type electric field sensor, the effective value of the electric field was measured for a case in which the sensor was shielded against electric fields with a material having a magnetic property shown in Table 2 and for a case in which no electric field shield was provided. The result of measurement is shown in Table 3. Here, the magnetic vector potential generator and the electric field sensor were positioned so that the central axis of the dielectrics 41 would be parallel to the z axis of the toroidal core 31. Also, the distance between the center of the magnetic vector potential generator and the electric field sensor was maintained at 0.25 m so that the shielding effect against electric fields would be conspicuous. The judgement of the propriety (good or bad) as the electric field sensor was determined as follows. If the ratio of the calculated electric field to the measured electric field was 0.80 or more, it was judged as good, whereas if the ratio was less than 0.80, it was judged as bad. In other words, the determination of the propriety was carried out using, as a threshold, a state in which the background electric field component occupied 20% of the total measured electric field.

As will be apparent from Table 3, the radiant electromagnetic wave can be effectively shielded by providing the electric field shield for the sensing section of the electric field sensor with a metal having an excellent electric conductivity or with a soft ferrite having an excellent radio wave absorption efficiency. It will be understood that, by shielding the sensing section of the electric field sensor against electric fields, the measured electric field generated by the magnetic vector potential coincides with the calculated value well, and the decrease in the electric field intensity due to the shield is not observed.

In the conventional communication system using an electromagnetic wave, communication obstruction is liable to take place because the electromagnetic wave tends to be shielded by an obstacle. In contract, in the communication system using a magnetic vector potential, the communication obstruction is not liable to occur because the transmissivity of the magnetic vector potential is considerably greater as compared with the conventional communication system. Also, the above-mentioned sending device and receiving device will be a great help in proceeding towards a practical application of this new communication system. Further, this new communication system can be employed for achieving wireless communication by eliminating the need for cables to be used in connecting various equipments.

(Math.1 )

$$\int *B \, d*S = \oint *A \, d*r = \Phi \qquad \cdots (6)$$

(Math.2 )

$$*E_A = \frac{S\mu Nfl_0 \cos\omega t \, \{r \sin\alpha *i - (r \cos\alpha - a) \, *j\}}{2\pi a \, (a^2 + r^2 - 2ra \cos\alpha)} \qquad (19)$$

(Math.3 )

$$*E_B = -\frac{S\mu Nfl_0 \cos\omega t \, \{r \sin\alpha *i - (r \cos\alpha + a) \, *j\}}{2\pi a \, (a^2 + r^2 + 2ra \cos\alpha)} \qquad (23)$$

(Math.4 )

$$*E = \frac{S\mu Nfl_0 \cos\omega t \, \{r^2 \sin 2\alpha *i + (a^2 - r^2 \cos 2\alpha) \, *j\}}{\pi \, \{(a^2 + r^2)^2 - 4a^2 r^2 \cos^2\alpha\}} \qquad (24)$$

TABLE 1

| ① No. | ② | ③ (m) | ④ (mA) | ⑤ ( ° ) | ⑥ (mV/m) | ⑦ (mV/m) |
|---|---|---|---|---|---|---|
| 1 | X | 0.25 | 30 | 0 | 226.5 | 227.2 |
| 2 | X | 0.50 | 30 | 0 | 55.8 | 56.6 |
| 3 | X | 1.00 | 30 | 0 | 14.3 | 14.1 |
| 4 | X | 2.00 | 30 | 0 | 3.4 | 3.5 |
| 5 | X | 3.00 | 30 | 0 | 1.3 | 1.6 |
| 6 | X | 2.00 | 30 | 30 | 3.5 | 3.5 |
| 7 | X | 2.00 | 30 | 60 | 3.4 | 3.5 |
| 8 | X | 2.00 | 30 | 90 | 3.5 | 3.5 |
| 9 | ◯ | 0.25 | 30 | 0 | 224.0 | 227.2 |
| 10 | ◯ | 0.50 | 30 | 0 | 54.2 | 56.6 |
| 11 | ◯ | 1.00 | 30 | 0 | 13.8 | 14.1 |
| 12 | ◯ | 2.00 | 30 | 0 | 3.2 | 3.5 |
| 13 | ◯ | 3.00 | 30 | 0 | 1.4 | 1.6 |
| 14 | ◯ | 2.00 | 30 | 30 | 3.3 | 3.5 |
| 15 | ◯ | 2.00 | 30 | 60 | 3.4 | 3.5 |
| 16 | ◯ | 2.00 | 30 | 90 | 3.3 | 3.5 |
| 17 | ◯ | 10.00 | 300 | 0 | 1.4 | 1.3 |

① EXAMPLE
② SHIELD OF ELECTRIC FIELD SENSOR (◯ : PRESENT. X : ABSENT)
③ DISTANCE r
④ CURRENT
⑤ ANGLE α
⑥ MEASURED ELECTRIC FIELD
⑦ CALCULATED ELECTRIC FIELD

TABLE 2

| MATERIAL | ① | | ② (Ωm) |
|---|---|---|---|
| | iHc (Oe) | μm | |
| ③ | 0.007 | 450000 | $1.4 \times 10^{-7}$ |
| ④ | 0.025 | 3000 | $4.3 \times 10^{+1}$ |
| ⑤ | 0.10 | 2600 | $3.2 \times 10^{+4}$ |

① MAGNETIC CHARACTERISTICS
② ELECTRICAL RESISTANCE
③ Fe-Ni SYSTEM PERMALLOY
④ Mn-Zn SYSTEM FERRITE
⑤ Ni-Zn SYSTEM FERRITE

## TABLE 3

| ① | No. | ② (kHz) | ③ (mm) | | | ④ (mA) | ⑤ (m) | ⑥ SHIELD MEMBER MATERIAL | ⑥ ⑦ (mm) | ⑧ | ⑨ $E_{mea}$ (mV/m) | ⑩ $E_{cal}$ (mV/m) | RATIO $\dfrac{E_{cal}}{E_{mea}}$ | ⑪ |
|---|---|---|---|---|---|---|---|---|---|---|---|---|---|---|
| | | | d | $r_i$ | $r_o$ | | | | | | | | | |
| | 21 | 20 | 5 | 15 | 20 | 30 | 0.25 | NOTHING | 0 | × | 345 | 226.5 | 0.66 | × |
| | 22 | 20 | 5 | 15 | 20 | 30 | 0.25 | PERMALLOY | 2 | × | 238 | 226.5 | 0.95 | ○ |
| | 23 | 20 | 5 | 15 | 20 | 30 | 0.25 | PERMALLOY | 2 | ○ | 233 | 226.5 | 0.97 | ○ |
| ① | 24 | 20 | 5 | 15 | 20 | 30 | 0.25 | $Mn-Zn$ | 5 | × | 267 | 226.5 | 0.85 | ○ |
| | 25 | 20 | 5 | 15 | 20 | 30 | 0.25 | $Ni-Zn$ | 5 | × | 304 | 226.5 | 0.75 | × |
| | 26 | 20 | 5 | 15 | 20 | 30 | 0.25 | PERMALLOY $Mn-Zn$ | 2 5 | ○ | 231 | 226.5 | 0.98 | ○ |
| | 27 | 20 | 5 | 15 | 20 | 30 | 0.25 | PERMALLOY $Ni-Zn$ | 2 5 | ○ | 232 | 226.5 | 0.98 | ○ |

① EXAMPLE ② SEND FREQUENCY
③ INNER AND OUTER DIAMETER ( $r_i$ , $r_o$ ) AND SECTIONAL RADIUS ( d ) OF FERRITE
④ MAXIMUM APPLIED CURRENT ⑤ DISTANCE ( r ) ⑥ ELECTRIC FIELD SENSOR ⑦ THICKNESS
⑧ EARTH ( ○ : PRESENT, × : ABSENT) ⑨ MEASURED ELECTRIC FIELD ⑩ CALCULATED ELECTRIC FIELD
⑪ PROPRIETY ( ○ : GOOD, × : BAD)

**Claims**

1. A communication system comprising:

   a sending device (11, 21) for generating a magnetic vector potential by passing an alternating current through a coil winding (32); and
   a receiving device (12, 22) for measuring an electric field generated by a time variation of the magnetic vector potential.

2. The communication system according to claim 1, wherein said sending device (11, 21) and said receiving device (12, 22) are covered with an electromagnetic wave shield member which is electrically conductive.

3. The communication system according to claim 1, wherein said coil winding (32) is wound around a core (31) made of a magnetic substance.

4. The communication system according to claim 3, wherein said magnetic substance is soft and shaped like a rod or a ring.

5. A sending device (11, 21) for a communication system comprising:

   a coil winding (32) made of an electrically conductive material;
   a power circuit (38) for passing an alternating current through said coil winding (32) so as to generate a magnetic vector potential; and
   modulating means (37) for modulating the alternating current in accordance with a signal to be sent.

6. The sending device according to claim 5, wherein said sending device is entirely covered with an electromagnetic wave shield member (33, 34).

7. The sending device according to claim 5 or 6, wherein said coil winding (32) is wound around a core (31) made of a magnetic substance.

8. The sending device according to any of claims 5 to 7, wherein said modulating means (37) performs a modulation selected from the group consisting of AM (Amplitude Modulation), FM (Frequency Modulation), and PM (Pulse Modulation).

9. A receiving device (12, 22) for a communication system comprising:

   an electric field sensor (41, 42, 43, 44, 45) for sensing an electric field generated by a time variation of a magnetic vector potential; and
   shield means (46, 47) for shielding said electric field sensor (41 42, 43, 44, 45) against electric fields that are not related to the magnetic vector potential acting as a signal propagation medium.

10. The receiving device according to claim 9, wherein said electric field sensor (41, 42, 43, 44, 45) is a resonance-type electric field sensor.

11. The receiving device according to claim 9 or 10, wherein said shield means (46, 47) is an electrically conductive metal body (46, 47) for shielding a sensing section (41, 42, 43) of said electric field sensor (41, 42, 43, 44, 45) against electric fields.

12. The receiving device according to any of claims 9 to 11, wherein said shield means (46, 47) is a grounded metal body (46, 47) for shielding a sensing section (41, 42, 43) of said electric field sensor (41, 42, 43, 44, 45) against electric fields.

13. The receiving device according to any of claims 9 to 12, wherein said shield means (46, 47) is a soft magnetic substance for shielding a sensing section (41, 42, 43) of said electric field sensor (41, 42, 43, 44, 45) against electric fields.

FIG. 1

FIG. 2

FIG. 3

RELAY BASE CENTER — 10

SENDING DEVICE — 11

RECEIVING DEVICE — 12

MAGNETIC VECTOR POTENTIAL

30

TERMINAL DEVICE — 20

SENDING DEVICE — 21

RECEIVING DEVICE — 22

EP 0 920 141 A2

FIG. 4

EP 0 920 141 A2

38 ∿

37 — MODULATOR

SIGNAL GENERATOR

39

35

11,21

31

32

22,12

35

FIG. 5A

FIG. 5B

FIG. 6A

FIG. 6B

FIG. 7A

FIG. 7B

FIG. 8

FIG. 9A

FIG. 9B

21

FIG. 10

FIG. 11